# EUROPEAN PATENT SPECIFICATION

(11) **EP 2 392 796 B1**
(45) Date of publication and mention of the grant of the patent: **26.12.2012**
(21) Application number: 10290303.6
(22) Date of filing: 07.06.2010
(51) Int. Cl.: F02C 6/00, F02C 7/08, F01N 3/20, B01D 53/90, B01D 53/94

(54) **Device for the emission reduction of a turboshaft engine and corresponding method**
Vorrichtung zur Abgasreduktion eines Turboschaftmotors und zugehöriges Verfahren
Dispositif pour la réduction des émissions dans un turbomoteur et procédé associé

(43) Date of publication of application: 07.12.2011
(73) Proprietor: EADS Deutschland GmbH, 85521 Ottobrunn (DE); MTU Aero Engines GmbH, 80995 München (DE); EADS France SAS, 75016 Paris (FR)
(72) Inventor: Steinwandel, Jürgen, 88690 Uhldingen-Mühlhofen (DE); Bayer, Erwin, 85221 Dachau (DE); Joubert, Emmanuel, 92120 Montrouge (FR)
(74) Representative: Maiwald Patentanwalts GmbH

(56) References cited:
- EP-A2- 0 271 360
- DE-A1-102009 003 610
- US-A- 5 547 650
- US-A1- 2002 095 939
- US-A1- 2004 100 101

## Description

### Field of the invention

The invention relates to a device and method for an exhaust gas temperature and emission reduction for a lean bum turboshaft engine.

### Background of the invention

The invention relates to gas turbine engines especially turboshaft engines which are widely used to power aircrafts as helicopters or wing aircrafts, wherein the wing aircraft size can range from small to medium civil aircraft up to large military transporters (like A 400 M). The energy produced in the turboshaft engine drives the power shaft. Energy is generated by burning a fuel-air mixture, which is characterized by a high excess of oxygen, high Lambda values (> 1) and a lean burner zone, thus providing a stream of hot expanding gas. The hot high-velocity gases are directed from the combustion chambers through turbine wheels which convert the axial movement of the gas to a rotary motion. This rotary power is used on the one hand to rotate the compressor and on the other hand to drive a powershaft, which drives a propeller or a rotor transmission.

Due to sustainability goals of emission reductions it is also required for aviation technologies to reduce in particular the ozone precursors carbon monoxide, hydrocarbons and nitrogen oxides. Furthermore the green house gas carbon dioxide needs to be reduced as well as particulate matter in order to lower the environmental impact in the atmosphere. Aircraft emissions may change background levels of trace gases and the radiation balance by forming condensation trails (contrails) due to the emission of particles. The exhaust temperature of a turboshaft engine leads to a IR-signature which can be detected by infrared sensors and thus may be used by military or defense scientist to detect for example pilot operated or UAV-unmanned aerial vehicles.

The emission reduction technologies can generally be assigned in two basic categories. On the one hand the implementation of primary measures serves to reduce combustion related emissions. On the other hand secondary measures for emission reduction are utilized after the combustion in order to reduce the emission concentrations of the exhaust gas. The combustion in turbo shaft engines is characterized by high excess of oxygen. These conditions are comparable to diesel engines. However, in turbo shaft engines, totally different exhaust gas temperatures and compositions are given. Therefore, the components which may be used for diesel engines may not be adapted without major changes to turbo shaft engines.

US 2004/0100101 A1 discloses an integrated turbine power generation system with a catalytic reactor. A recuperator is provided for cooling exhaust gas after it has passed a low pressure catalytic reactor.

US 2002/0095939 A1 discloses a CO-generator utilizing a micro gas turbine engine. A catalytic element is provided within a heat exchanger assembly.

EP 0 271 360 A2 discloses a power generating device comprising a turbine and a burner which is powered by fuel and adapted for heating combustion products which in turn heat a fuel/air mixture in a heat exchanger.

US 5,547,650 discloses a process for removal of oxides of nitrogen.

### Summary of the invention

It is an object of the invention to provide for turboshaft engines an exhaust gas treatment device and method using catalytic converters.

The object is met by a turbo shaft engine comprising a heat energy converter and a catalytic converter according to the independent claims. Further embodiments are incorporated in the dependent claims.

According to an embodiment of the invention, a turbo shaft engine comprises a combustion section producing emissions, a heat energy converter, a catalytic converter for reducing the emissions, wherein the catalytic converter is arranged downstream of the combustion section. Furthermore, the heat energy converter is arranged between the combustion section and the catalytic converter, wherein the heat energy converter is adapted to cool emission gases through heat transfer to an operative temperature range of the catalytic converter before feeding these gases to the catalytic converter.

In this way, the low and relatively small window of operability of a catalytic converter can be achieved by cooling down the produced hot emissions. The heat energy converter is arranged between the combustion section and the catalytic converter. Adjusting the temperature range promotes the reduction of the emissions. The heat exchanger reduces the temperature of the exhaust gas to within the reaction range of the different exhaust species to be reduced. For example, the temperature range suitable for a selective catalytic NOₓ reduction (SCR) in the presence of a catalyst lies between 250°C and 500 °C. However, the temperature range depends on the nature of the catalyst and accordingly to a potential introduction of reducing agent or other substance injected into the upstream flow of the catalyst.

It is a further object of the invention to reduce infrared signatures of the exhaust gas of a turboshaft driven aircraft. This can be done by the reduction of the temperature of the exhaust gas.

It is another object of the invention to provide a device and method for the control of exhaust gas emissions, in particular nitrogen oxides (hereinafter abbreviated NOₓ), hydrocarbons (hereinafter abbreviated HC), carbon monoxide (hereinafter abbreviated CO), carbon dioxide (hereinafter abbreviated with CO₂), and particulate matter (hereinafter abbreviated with PM).

Depending on the sulfur content of the fuel used in the combustion section there is also a need to provide a device for reducing the sulfur content upstream of sulfur sensitive catalytic converters.

According to an embodiment of the invention, the heat energy converter of the turbo shaft engine is adapted to adjust the operative temperature range between 300 °C and 400 °C.

In this way, the conversion conditions can be adjusted to a temperature range which is preferably about 300 °C to about 400 °C when the exhaust gas enters the at least one catalytic converter. This means a temperature of the gas at the exit of the combustion section exit covering the temperature range between 650 °C to 700 °C is decreased by about 300 °C to 400 °C. By maintaining the operating temperatures of an catalyst a deactivation at high temperatures by the loss of catalytic surface area and a collapse of pore structure and/or chemical transformations of catalytic phases to non-catalytic phases can be prevented. On the other hand below the temperature of about 300°C the catalytic converter passes the so-called "light off' temperature and the catalytic converter reaches zero efficiency because the temperature is cooler than the required activation temperature.

By reducing the temperature more than about 300 °C, the infrared signature of e.g. a helicopter or a UAV-unmanned aircraft, which is generated by the hot emitting exhaust gas by locally changing the infrared background level of the atmosphere, is significantly reduced and can prevent detection by infrared sensors of stationary or mobile monitoring platforms.

Furthermore, it is an object of the invention to provide a device and a method which can serve as an emission reduction by effectively increasing the turbine efficiency.

According to another embodiment of the invention, the energetic converter of the turbo shaft engine further comprises a second heat exchanger arranged for heat transfer from the first heat exchanger into the compressed air section before entry into the combustion section in order to improve combustion efficiency.

Thus the heat extracted from the exhaust gas by the first heat exchanger is used to heat the compressed air. The warming of the air being combusted results in an improved combustion efficiency. In this way the fuel injection can be lowered still maintaining the same engine efficiency. Therefore less fuel may be consumed and for example CO₂ emissions can be reduced. Using this thermal heat management the aircraft needs less fuel on board for covering the same distance thus saving weight and costs.

According to an embodiment of the invention, at least one heat exchanger is selected from the group consisting of tubular heat exchangers, heat pipes and gas/gas heat exchangers.

The tubular heat exchangers can be for example a shell and tube heat exchanger which consists of a series of tubes. These heat exchangers are typically used for high pressure applications and temperatures above 260 °C, because the shell and tube heat exchangers are robust due to their shape. Another type of heat exchanger is a heat pipe that can quickly transfer heat from one location to another.

Relating to gas/gas heat exchangers the air introduced into the exhaust section has to be cooler than the exhaust gas in order to remove heat. Air of the required temperature range is readily available from the atmosphere especially at high altitudes where the temperature is below 0° C and can be used for efficient cooling. This cooling air can especially be associated with the turbine section which is located in the exhaust section in order to cool turbine blades.

It should be understood that the gas/gas heat exchanger using cooling air can be combined with heat pipes or other types of heat exchangers. Furthermore, several sets of heat exchangers or heat pipes may be positioned circumferentially about the rotational axis of the gas turbine engine. Also intermediate fluids other than in a heat pipe may be used for transferring heat.

In addition, a serial arrangement of the heat exchangers can be provided. For example a first heat exchanger cools down the exhaust gas entering the first catalyst using cooling air and before entering the second catalyst another heat exchanger uses the injection of a liquid reducing agent for further cooling down the gases leaving the first catalyst. Thus a stepwise reduction of the temperature ranges corresponding to the different operations windows of the specific catalysts can be provided.

According to another embodiment of the invention, the catalytic converter is selected from the group consisting of an oxidation catalyst, a catalytic particle filter, a selective catalyst for reduction of nitrogen oxides (SCR), a combination of SCR and oxidation catalyst, and an SCR catalyst with incorporated particle filter.

All catalytic converters cited above are flow through exhaust devices. The oxidation catalyst contains for example a honeycomb structure covered with a layer of a catalyst. This chemical layer contains catalytically active metal functional groups and comprises for example platinum group metals, other transition and noble metals and/or mixtures thereof. In some embodiments, the additional metals are part of the uniform composition used to form the structural catalyst body. An oxidized catalytic removal of hydrocarbons as well as carbon monoxide can be done for example by Pt/Al₂O₃ catalysts. Particle filters can also be used as catalytic converters such that a combination of a particle filter and catalytic converter as for example an oxidation catalyst is possible.

According to another embodiment of the invention the turboshaft engine further comprises a regenerative particulate filter and/or a device for desulfurization.

A particle filter in order to separate solid aerosols as carbonaceous particles from the gas phase may be porous ceramics or flow through fibre filters and prevents that the downstream catalytic converter are deactivated or inhibited by the deposit of particles or coke on the catalyst surface. If the particle filter is arranged separately the particles as soot accumulated may be removed by regeneration. This is done for example by thermal engine management and increasing the exhaust temperature. If this regeneration method is used the first heat exchanger needs to be regulated to cool more effectively by increasing for example the injected amount of cooling air. Devices as a control unit, temperature sensors or mass flow controllers can be used for proper temperature regulation.

Furthermore there is a need to remove sulfur oxides which would otherwise deactivate the catalyst. A selective catalyst for desulfurization only needs to be installed upstream the catalysts if the total content of sulfur of the fuel is above a sulfur mixing ratio of 50 ppm. In the presence of sulfur the catalytic components can be poisoned and the active catalytic area can be reduced by blocking the active sites of the catalyst. If a desulfurization is necessary it can be done by a adsorbing structure which may contain metals such as Vanadium, Iron, Chromium, a platinum group metal, a rare earth metal or zeolites. The presence of excess oxygen enhances the sulfur adsorption because SO₂ is oxidized to the SO₃, which is more easily adsorbed by the desulfurization device.

According to another embodiment of the invention the catalytic converter or desulfurization device comprises at least one metal or a metal layer by elements selected from the group Titanium, Vanadium, Molybdenum, Chromium, Iron, Copper; Cer and rare earth metals.

These metals can be in form of oxides or sulfates.

According to another embodiment of the invention, the oxidation catalyst comprises a platinum group metal on a monolith support for an oxidative catalytic removal of hydrocarbons and carbon monoxides.

The precious metals used in oxidation catalyst applications are platinum, palladium and rhodium. Especially palladium and platinum metals are catalysts with high activities for CO and HC oxidation reactions and they are less prone to poisoning the catalyst compared to metal oxide catalysts. In this way HCs and CO which are precursors of ozone can be efficiently reduced. Especially at higher flight levels where CO concentration are significantly lower as on the ground a reduction of CO contributes to maintain the background levels of this trace gas.

The form of the catalytic converter can be monolithic such that a rapid and effective contacting with the exhaust gas flow is promoted with a pressure drop as low as possible in order to not influence the engine performance.

According to an embodiment of the invention, the oxidation catalyst is a platinum Al₂O₃ catalyst.

Aluminum oxide Al₂O₃ has many modifications from the porous γ -Al₂O₃ to non-porous α-Al₂O₃ (> 1100°C), wherein the solid- solid phase transitions depend on the temperature. One important parameter for the efficiency of a catalyst is the active surface area. Therefore the modifications Al₂O₃ (boehmite), with a surface area of 200-300 m²/g, which is stable at temperatures below 375° C, and the porous γ-Al₂O₃ are preferable.

According to another embodiment of the invention, the particle filter and/or the selective catalyst for nitrogen oxides are zeolite based.

Zeolite based means that the adsorbent-catalyst is mainly composed of zeolite which are crystalline aluminosilicates capable of adsorbing other compounds as well as a variety of different cations into their crystal lattice. By means of the size of their pores the zeolites are capable of adsorbing molecules which have to be dealt with in the adsorptive purification of gases as for example oxides of nitrogen and lower hydrocarbons. Furthermore the zeolite based adsorbent-catalyst can comprise a catalyst component supported thereon, said component being coated for example on a honeycomb structure.

Thus the adsorbability of zeolites can be exploited in order to reduce particulate matter and/or nitrogen oxides in exhaust gas. In this way a combination with a particle filter and a DENOx catalyst can be realized and the adsorbability of zeolite and the catalytic activity of the catalyst can act synergistically to provide an improved ability for purification of the exhaust gas.

DENOx catalysts optimize a selective catalytic reduction (SCR) of nitrogen oxides. The selective catalytic NOₓ reduction SCR involves the reduction of NOₓ by ammonia NH₃ over the catalyst. These catalysts operate in a temperature range between about 300 and 400 °C. By using the first heat exchanger, these temperatures can easily be achieved. The zeolites are selected with a Si/Al ratio, which provide a heat resistance to said temperature window.

According to another embodiment of the invention, the zeolite based catalyst comprises at least one metal or a metal layer by elements selected from the group copper, cer, iron and platinum.

Zeolites which are doped with metal such as Cu, Ce, Fe, and Pt enhance the efficiency of the catalytic converter.

According to another embodiment of the invention, a turbo shaft engine further comprises an injection device, wherein the injection device is adapted to inject at least one nitrogen containing reducing agent before the emission gases enter a selective catalytic converter (SCR).

The injection device can be a high velocity or high pressure nozzle in order to homogenously distribute the reducing agent over the whole cross section of the gas turbine cross section. The reducing agent can be introduced in the gaseous phase or in the liquid phase. The injection device can either be a grid or a metering lance in order to achieve the best distribution and mixing with the exhaust gas. This injection can also be used for further cooling of the exhaust gas. For example, water containing the reducing agent can be used to cool down the air temperature to the temperature window of the selective catalytic converter.

According to another embodiment of the invention, an aircraft is provided comprising a turbo shaft engine, further comprising a heat energy converter and a catalytic converter for reducing the emissions, wherein the heat energy converter is adapted to cool emission gases through heat transfer to an operative temperature range of the catalytic converter before feeding these gases to the catalytic converter.

By the reduction of the temperature of the exhaust gas, the infrared signature is reduced. Therefore the exhaust plume as well as heated tail pipe metals are less detectable by IR detectors.

By using the heat exchangers, a narrow temperature range can be adjusted for a HC/SCR catalyst. Thus, the metal based catalysts do not lose their selectivity and efficiency due to too high temperature ranges. The selective catalytic reduction of nitrogen oxides SCR is an efficient way to remove NOₓ from a lean burning gas turbine engine as the turbo shaft engine.

Furthermore, the engine efficiency can be improved by the option of exhaust gas energy recovery so that the overall CO₂ emissions can be reduced. The latter cannot be reduced by the usual exhaust gas processing systems arranged in the exhaust section.

According to another embodiment of the invention, a method is provided for exhaust gas processing for a turbo shaft engine, comprising the following steps: reducing an exhaust gas temperature of a turbo shaft engine by a first heat exchanger to an operative temperature range of a downstream catalytic converter; injecting a reducing agent in the exhaust gas by an injection device before the emission gases enter a selective catalytic converter; reducing gas emission of the exhaust gas by at least one catalytic converter; and filtering particle matter by a particle filter.

By means of the exhaust gas processing system, the exhaust emissions as particles and gases can be reduced to a higher degree as this will be possible by a combustion chamber improvement.

According to another embodiment of the invention, the method further comprises: transferring the heat recovered by the first heat exchanger to a second heat exchanger into the compressed air section of the turbo shaft engine before entering the combustion section in order to improve combustion efficiency.

It should be noted that the above features may also be combined. The combination of the above features may also lead to synergetic effects, even if not explicitly described in detail.

### Brief description of the figures

Figure 1 shows schematically a turboshaft engine with the power shaft extended out the front and a heat converter in combination with a catalytic converter.
Figure 2 shows another turboshaft engine with the power shaft extending out the back and a heat and catalytic converter, respectively.
Figure 3 shows a helicopter with a turboshaft engine comprising a heat converter upstream of two catalytic converters.
Figure 4 shows a flowchart of the steps of a method according to an exemplary embodiment of the invention.

### Detailed description of the figures

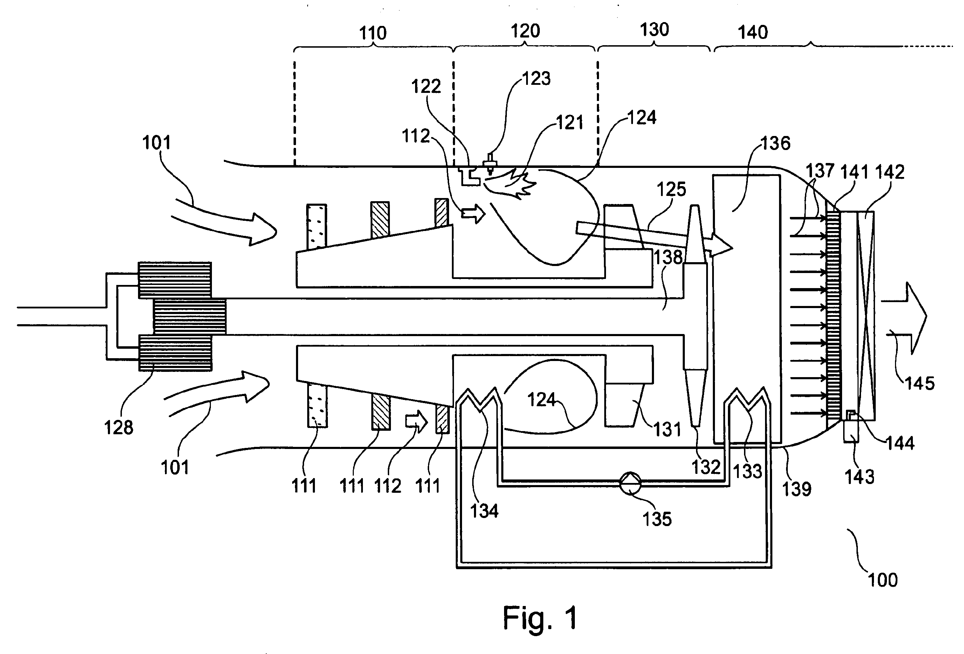

Fig. 1 shows schematically a turbo shaft engine 100. The figure shows a cross-section through a casing 139 which is symmetrically and circumferentially disposed about an engine shaft 138 which extends out of the front. The shaft power produced by the free turbine 132 extracts the energy from the exhaust gas and transfers it via a gear box 128 to a receiving member such as a rotor of a helicopter (not shown).

The turbo shaft comprises an intake area from where intake air 101 is delivered to the compressor section 110. This compressor may comprise several stages 111 in order to compress the air. The compressed air 112 enters in serial flow the combustion section 120. In this combustion section is a nozzle 122 and an ignition 123 located in order to inject fuel and burn the fuel/air-mixture 121 creating downstream a burning zone 124. The gases burned during the combustions are then discharged at great speed to the following turbine section 130. The high pressure turbine 131 extracts energy in order to drive the compressor. The low pressure of free turbine 132 is used to convert the energy into the output of shaft power. The air 125 is then delivered to the exhaust section 140.

In the volume 136, which is situated downstream the turbine 132, a heat exchanger 133 can be located. After passing the heat exchanger, the air 137 can enter a first catalytic converter 141 in order to reduce emissions. The heat exchanger 133 is arranged in order to decrease the temperature such that the first catalytic converter may efficiently catalyze the emissions. In the next step, an injection device 144 is used in order to inject a reducing agent which is contained in a container 143. This reducing agent can either be gaseous or liquid. If using a liquid reducing agent, it can also be used for cooling down the air to the operative temperature of the downstream catalytic converter 142. This catalytic converter may for example be a nitrogen oxide SCR catalytic converter. After these two treatment steps, the exhaust gas 145 is emitted to the atmosphere.

In order to enhance the efficiency of the gas turbine engine, the incoming air can be heated. The heat can be recovered from the first heat exchanger 133 to a second heat exchanger 134 which is located in the entrance of the combustion section. By a heating of the incoming air into the combustion section the compressed air engine can improve its performance and simultaneously lower the CO₂ emission. The heat exchanging system may comprise a medium in the inside of a tubular heating devices which is pumped by a pump 135 from the exhaust section in direction to the entrance of the combustion section 120.

The heat exchangers may also be heat pipes. Heat pipes consist of three basic components: a container, a working fluid, and a capillary structure. The fluid possesses a high latent heat of vaporization in order to transfer large amount of heat with minimum fluid flow. Vapour can flow through the system and condenses back into a liquid at the cold interface releasing this latent heat. The liquid within the heat exchanger is vaporized by the hot exhaust air flowing across the heat exchangers in the volume 136 thus absorbing the heat. This cools the air such that the operative windows of the following catalysts are achieved. The vaporize fluid then can expand back the channels of the heat pipes toward the relatively cool region of the entrance of the combustion section, where the vapour again condenses. Such the differences in temperature between the volume 136 and the air 112 trigger a heat transfer cycle.

Furthermore, it should be understood that several sets of heat exchangers or heat pipes may be positioned circumferentially about the shaft access. Thus, the total volume 136 can be cooled down efficiently. The volume 136 can alternatively be cooled down by a housing, which contains a liquid cooling medium. The installation of such a housing is also possible around a catalytic converter.

Instead of two heat exchangers which communicate, only one single heat exchanger can be used, wherein the first heat exchanger is necessary for the catalytic converters which are located downstream of this heat exchanger. When only the first heat exchanger is used, it can for example be a gas/gas heat exchanger by introducing air for example bypassed from the compressor in order to cool the air volume 136. Other possibilities to cool down the air are liquid/air heat exchangers, which is for example shown by the injection device 144 and the container 143, wherein the container 143 can contain an aqueous solution for example of urea with temperatures below the exhaust gas. Thus, an injection of this air through one or several nozzles will cool down the air efficiently in order to use the following SCR catalyst.

The first catalytic converter 141 may be a oxidation catalyst layered with platinum or rhodium promoting for example the oxidation of CO to CO₂:

2 CO + O₂ - 2 CO₂

Furthermore oxidations of unburned HCs to CO₂ are promoted. These reactions take place for example at about 300 °C on the surface of aluminium oxide matrices. The structures of these catalysts are particularly suitable for use in a flow-through mode.

The second catalytic converter 142 may be a SCR selective catalytic reducer, wherein the catalysts may for example be a metal doped zeolites, titanium dioxide, vanadium pentoxide (V₂O₅) or molybdenum oxide (MoO₃). The denitrification reaction comprises the reaction of nitrogen oxide species in the exhaust gas such as nitrogen oxides (NO or NO₂). With a reducing agent, such as ammonia or urea, the production of the stable diatomic nitrogen N₂ and water is promoted. However, in the presence of water vapour, it has to be considered that the zeolite-based catalyst have a poor hydrothermal stability. Therefore, it is important to operate the SCR process in the relatively small temperature window between 300 and 400 °C.

The catalytic converters 141 and 142 can be used in any desired form such as particles, pellets, cylinders or monoliths. In case of particles or any other products stored in bulk a container has to be provided. For maintenance of the catalytic converters an access to these parts of changing or controlling can be provided.

The two catalysts 141 and 142 are chosen such that the first catalyst can be operated at higher temperature than the second catalyst. For example, the operating range for an oxidation catalyst of hydrocarbons and carbon monoxide is usually in a higher temperature range than the selective catalytic reduction, which is much narrower and also lower. In this way, undesirable exhaust constituents such as carbon monoxides, hydrocarbons and particle matter, which can be filtered by a combination of one of the catalysts and a particle filter, can be significantly reduced. For these kind of catalysts, it is necessary that the sulfur content of the fuel used is rather low and does not exceed 50 ppm (parts per million).

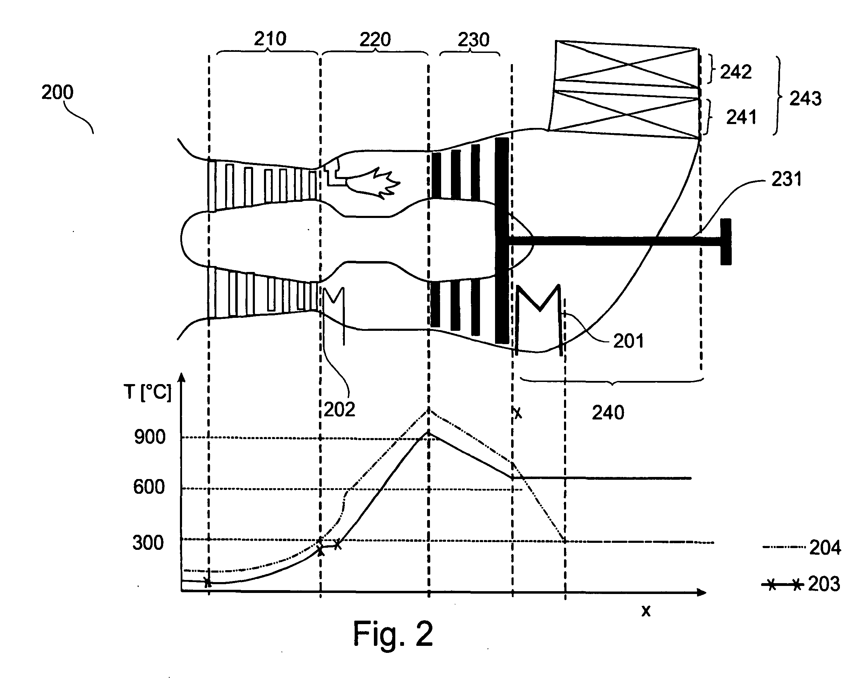

Whereas Fig. 1 shows a turbo shaft engine with a power shaft extended out the front, Fig. 2 shows a turbo shaft engine with a power shaft extending out the back. Another difference in the embodiment of the turboshaft engine is that the engine shown in Fig. 1 uses fuels which have sulfur contents below 50 ppm, whereas the engine shown in Fig. 2 uses fuel with a sulfur content above 50 ppm. Therefore there is a need to protect the sulfur sensitive catalytic converters arranged downstream in the exhaust flow.

Furthermore for better illustration of the thermal heat management the function of the temperature is shown in the lower diagram e in relation to the location x along the rotational axis or power shaft of the engine. The temperature is shown in °C on the ordinate. The graph line 203 refers to the temperature without heat exchangers and the dash dotted line 204 shows temperature if using the two heat exchangers 201 and 202. This graph is only schematically and not to scale.

The turbo shaft engine of Fig. 2 consists of the following sections, firstly the compressor section 201, the combustion section 220, the turbine section 230, and finally the exhaust section 240. The rotational power produced by the free turbine which his connected to the turbo shaft 231 can be delivered to drive an aircraft propeller, a helicopter rotor system, or any other rotor system not shown. Located in the exhaust tract of the turbo shaft engine 200 is a first catalyst 241 comprising for example a desulfurisation device and/or a catalytical particulate filter, and a second catalyst 242 for a selective catalytic reduction or also said SCR or DENOx step. These two catalytic converters form an exhaust treatment assembly 243 in order to reduce the emissions of the exhaust gas and emit it to the atmosphere.

Whereas medium temperature SCR vanadium-based catalysts, e.g. V₂O₅/TiO₂ operate in a temperature range between about 250 and about 450 °C, zeolites can operate in a temperature range of about 350 °C to about 600 °C. However, above 600 °C, a deactivation at these exposure temperatures can take place.

Because sulfur contents above 50 ppm negatively affect the catalyst by deactivation and poisoning respectively a desulfurisation device 241 is arranged upstream the following catalytic converters. The sulfur oxide adsorbent 241 be placed on a support as ceramics or Silica and Alumina. This sulfur oxide adsorbent effectively protects and maintains the activity and life time of the downstream catalytic converter, which may be used to catalyse the conversion of NOx to inert products. Besides a SCR catalysts also catalytic oxidation catalysts for CO and unburned HCs can be protected against sulfur deposits.

In order to guarantee that the temperature windows of the catalytic converters are always met, it is also necessary to control the temperature by a temperature sensor (not shown). If for example the pilot increases the flow of fuel injected into the combustion chamber, this would result in an increasing gas temperature in the high pressure turbine, therefore a control has to take place in order to increase the cooling, for example by gas/gas heat exchangers, which may work additionally to other heat exchangers as for example heat pipes. The cooling air can also be introduced in the turbine section in order to protect the turbines from temperatures which are higher than the melting point of the rotor blades.

Referring to the temperature function in the lower diagram the temperature of the intake air has usually the temperature of the outer atmosphere which is shown in the range of 0 °C or 10 °C and may vary several tens of °C depending on the altitude. This graph is only schematically and not to scale, such that the shown temperature line may vary by about +/-10 °C in the direction of the axis of ordinate. The intake air temperature will increase in the compressor during the compression to around 250 or 260 °C. Without using a heat exchanger the temperature of graph 203 stays stable until the ignition and injection of the fuel (see second and third crosses at graph 203). At about the location of the flame beginning (see third cross on graph line 203) the temperature increases the temperature continuously until the end of the combustion section.

When entering the turbine section, the air again cools down from around 900 °C to 700 °C (see graph line 203). In the exhaust section, the air usually stays at the level which was reached downstream the turbine section, which may be in the range of 750 to 600 °C. Flame temperatures usually depend on the fuel amount used and the air/fuel-mixture. By increasing the amount of oxygen i.e. very lean air/fuel-mixtures, the flame temperature can be lowered. Thus, if the air temperature measured by the temperature sensor is for example too high, it can also be controlled by adjusting the fuel injection rate.

The dotted dashed line 204 shows the temperature function in dependence of the location in the turbo shaft engine using the heat exchangers 201 and 202. The heat exchanger 202 in the beginning of the combustion section before the flame is ignited, heats the air which is compressed to a higher temperature. The heating means or heat exchanger 202 is connected to the heating means or heat exchanger 201 in order to transfer the heat of the exhaust gas in the exhaust section 240 to the combustion section 220. As can be seen in the graph by the dotted dashed line 204, the heat exchanger 202 is capable of increasing the temperature of the compressed air before it is ignited.

These heat exchangers are only sown schematically in Fig. 2. They can also be gas/gas heat exchangers, wherein a current of hot gas, which is collected at the outlet of the turbine section, is reinjected into the combustion section. Depending on the amount of hot air injected, the air/fuel mixture will increase its temperature. This increase in temperature causes an increase in the power delivered by the turbine engine. In the case shown, the heat transfer achieves a temperature increase of 200 K. The temperature increase can also be adjusted to lower increases as from 50 K to 200 K. If the parts of the high pressure turbine are not cooled down by an additional heat exchanger, the parts have to be dimensioned as to withstand the increase in temperature, which may lie above 900 °C. Alternatively the fuel consumption and flame temperatures can be reduced as long as the same engine efficiency is achieved compared to the arrangement without heat exchangers. By this heat exchanger series the overall fuel consumption can be reduced, which lowers all gas emissions including CO₂ of the turbo shaft.

The reduction of the exhaust gas temperature can be used to reduce the infrared signature significantly. Therefore turboshaft driven aircrafts with this kind of thermal management are not easily detectible by an infrared detector from the ground or other observation platform. Due to the use of a turbo shaft, a potential catalyst induced pressure drop can be tolerated and does usually not interfere with the engine operation.

This is contrary to turbojet engines, which need the pressure in order to create the thrust and propulsion for the aircraft. However a blocking of the particle filter or catalytic converter has to be prevented by regular maintenance.

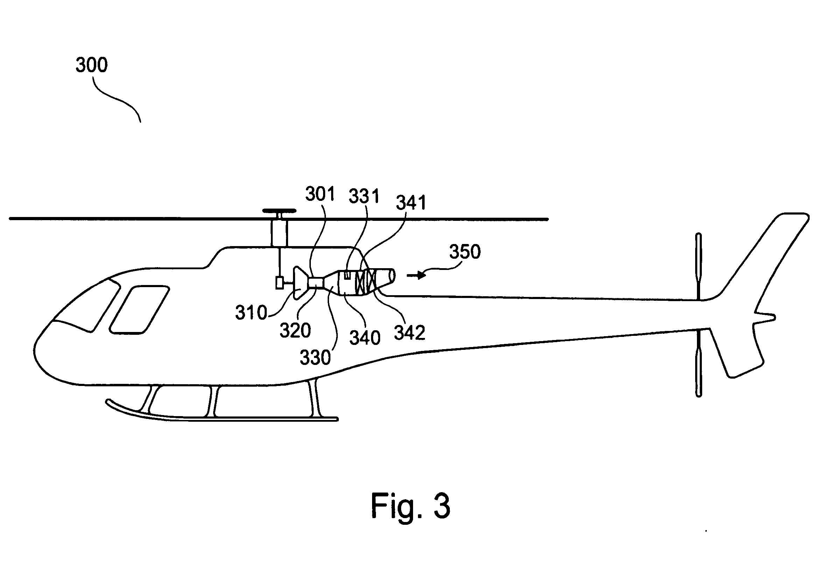

Fig. 3 shows a helicopter 300 with a rotor 302 which is rotated by a turbo shaft engine via the gear box 303. The turbo shaft engine 301 comprises of a compressor, a combustion section 320, a turbine section 30 as well as an exhaust section 340. In the exhaust section downstream of the turbine section 330, a heat exchanger is located in order to cool down the air to the operative temperatures of the first catalyst 341 and the second catalyst 342. The exhaust gas 350 is thereafter emitted to the atmosphere. If these helicopters are used for military, it is an advantage to cool down the exhaust temperature of the exhaust gas 350 such that the infrared signature is reduced. Detectors from the ground or from another aircraft or mobile platform cannot well differentiate these low infrared signatures in relation to the background signatures. Thus, the security of the military pilots can be increased.

Using a second heat exchanger 332, which is not shown, the overall efficiency can be increased and the fuel consumption decreased. In addition to these combustion chamber improvements, the exhaust gas processing catalysts assembly reduces emission such as hydrocarbons, carbon monoxide, and optionally particulate matter or nitrogen oxides.

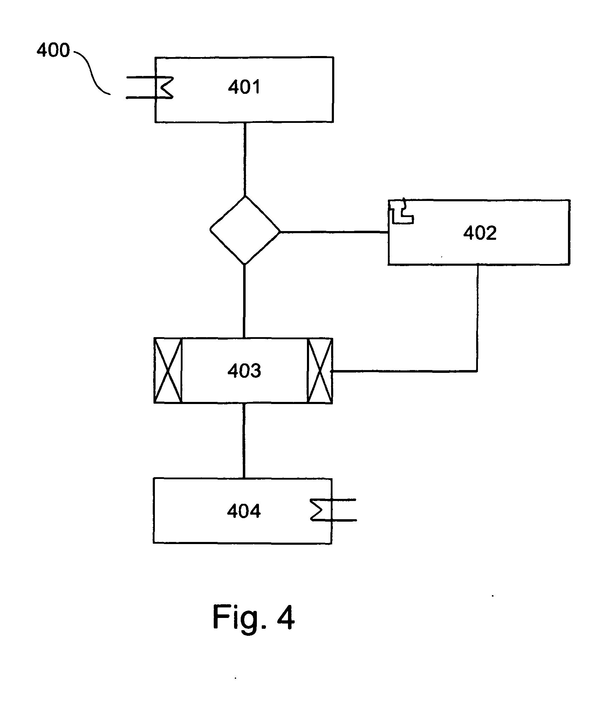

Fig. 4 shows a flow chart of the steps of a method for exhaust gas processing as well as the option of exhaust gas energy recovery for improving engine efficiency. Firstly, the method comprises the step 201, wherein an exhaust gas temperature of a turbo shaft engine is reduced by a first heat exchanger to an operative temperature range of a downstream catalytic converter.

Referring to the SCR reduction, that produces nitrogen and water, the reaction of the reduction of the nitrogen oxides with for example ammonia is effected between temperatures of 250 °C and 450 °C in the presence of a catalyst. When the reaction temperature is higher than 450 °C, the reaction speed of oxidation of the NH₃ is faster, and rather the oxidation of the ammonia takes place preferentially than the reaction of reduction of the nitrogen oxides. Therefore, the efficiency of the catalytic converter is reduced. Temperatures lower than 250 °C rather speed down the reaction of reducing nitrogen oxides. Therefore, a mean temperature between 300 °C and 350 °C is preferred.

In dependence of the catalytic converter used downstream of the first heat exchanger, a reducing agent can be injected in step 202. This reducing agent injection allows to selectively reducing for example nitrogen by the injection of a nitrogen containing substance into the emission gases. Using a aqueous solution, the first injection step can also be used to further reduce the temperature before the catalytic converter. Ammonia in gas phase reduces selectively nitrogen oxides (SCR) and is also suitable as a reducing agent for exhaust gas treatment in the presence of an excess of oxygen.

The temperature windows may be adjusted if another catalyst or another reducing agent is used. In order to be able to apply the homogenous distribution of a reducing agent, a special injection device, as well as the container which is adjusted to the outer casing has to be arranged. A good mixing of the exhaust gas and the reducing agent is necessary to have a contact with the reducing agent such that the reduction can efficiently take place.

Also a combination of the method steps 201 and 202 is possible. For example the first heat exchanger can be a liquid/air heat exchanger in order to reduce the gas temperature. Step 203 comprises the reduction of gas emission products of an exhaust gas by at least one catalytic converter. The gaseous emissions can be for example carbon monoxide, hydrocarbons or, after injection of a reducing agent, also a selective catalytic reduction as said above. In addition, a particulate filter can be combined with these catalysts. Because the concentrations of HCs, NOₓ,CO and PM in the exhaust gas varies according to the type of engine, air/fuel ratio and phase of engine operation, controlling of the engine conditions as well as the converter conditions is necessary. This can be done by a central control unit in combination with suited sensors (temperature, pressure) regulating the heat exchangers in dependence from the engine conditions.

Another optional step 204 is to transfer the heat recovered by the first heat exchanger to a second heat exchanger into the compressed air section of the turbo shaft engine before entry in the combustion section in order to improve combustion efficiency. Thus, fuel can be used and the overall emissions can be reduced, especially the CO₂ emissions.

### Reference list

- 100: turbo shaft engine
- 101: inlet air
- 110: compressor section
- 111: compressor stages
- 112: compressed air
- 120: combustion section
- 122: injection device for fuel
- 121: fuel flame
- 123: ignition device
- 124: flame zone
- 125: hot gas stream
- 130: turbine section
- 131: high pressure turbine
- 132: low pressure turbine
- 133: first heat exchanger
- 134: second heat exchanger
- 135: pump for intermediate fluid
- 136: air volume
- 139: casing
- 140: exhaust section
- 145: exhaust gas
- 141: first catalytic converter
- 142: second catalytic converter
- 143: container for reducing agent
- 144: injection device for reducing agent
- 145: exhaust gas
- 200: second embodiment of a turbo shaft engine
- 201: first heat exchanger
- 202: second heat exchanger
- 203: temperature without heat exchangers
- 204: temperature with two heat exchangers
- 210: compressor section
- 220: combustion section
- 230: turbine section
- 231: turbo shaft
- 240: exhaust section
- 241: desulfurisation device
- 242: catalyst
- 243: catalyst assembly
- 300: helicopter
- 301: turbo shaft engine
- 302: rotor blades
- 303: gear box
- 310: compressor section
- 320: combustion section
- 330: turbine section
- 331: heat exchanger
- 340: exhaust section
- 341: first catalyst
- 342: second catalyst
- 350: exhaust gas stream
- 400: method with the steps 401 to 404

## Claims

1. Turboshaft engine comprising:
a combustion section (120);
a heat energy converter (133);
a catalytic converter (141, 142) for reducing the emissions from the combustion section (120);
at least one second heat exchanger (134) arranged for heat transfer from the at least one first heat energy converter (133) into the compressed air (112) before entry into the combustion section (120) in order to improve combustion efficiency;
wherein the catalytic converter (141, 142) is arranged downstream of the combustion section (120);
wherein the heat energy converter (133) is arranged between the combustion section (120) and the catalytic converter (141, 142);
wherein the heat energy converter (133) is adapted to cool emission gases (125) from the combustion section (120) through heat transfer to an operative temperature range of the catalytic converter (141, 142) between 250°C and 500°C before feeding these gases to the catalytic converter (141, 142).

2. Turboshaft engine according to claim 1,
wherein the heat energy converter (133) is adapted to adjust the operative temperature range between 300 °C and 400 °C.

3. Turboshaft engine according to any one of the claims 1 to 2,
wherein at least one heat exchanger (133, 134) is selected from a group consisting of:
tubular heat exchangers;
heat pipes; and
gas/gas heat exchangers.

4. Turboshaft engine according to any one of the claims 1 to 3,
wherein the catalytic converter (141, 142) is selected from the group consisting of:
a oxidation catalyst;
a catalytic particle filter;
a selective catalyst for reduction of nitrogen oxides (SCR);
a combination of SCR and oxidation catalyst; and
a SCR catalyst with incorporated particle filter.

5. Turboshaft engine according to claim 4,
wherein the oxidation catalyst comprises a platinum group metal on a monolith support for an oxidative catalytic removal of hydrocarbons and carbon monoxide.

6. Turboshaft engine according to claim 5,
wherein the oxidation catalyst is a Pt/Al₂O₃ catalyst.

7. Turboshaft engine according to any one of the claims 1 to 4,
wherein the particle filter and/or selective catalyst (SCR) are zeolite based.

8. Turboshaft engine according to any one of the claims 1 to 7, further comprising a regenerative particle filter and/or a device for desulfurization (241).

9. Turboshaft engine according to any one of the claims 1 to 8,
wherein the catalytic converter or desulfurization device comprises at least one metal or a metal layer by elements selected from the group:
Titanium, Vanadium, Molybdenum, Chromium, Iron, Copper, Cer; and
rare earth metals.

10. Turboshaft engine according to any one of the claims 1 to 9 further comprising;
an injection device (144);
wherein the injection device (144) is adapted to inject at least one nitrogen containing reducing agent before the emission gases enters a selective catalytic converter (SCR) (142).

11. Aircraft (300) comprising a turboshaft engine according to one of claims 1 to 10

12. Method for emission reduction for a turboshaft engine comprising:
Reducing an exhaust gas temperature of a turboshaft engine by a first heat exchanger (133) to an operative temperature range of a downstream catalytic converter (141) between 250°C and 500°C;
Injecting an reducing agent in the exhaust gas by an injection device (144) before the emission gases enter a selective catalytic converter (SCR) (142);
Reducing gas emission products of the exhaust gas by a catalytic converter; and
Filtering particle matters by a particle filter;
Transferring the heat recovered by the first heat exchanger (133) to a second heat exchanger (134) into the compressed air section of the turboshaft engine before entry into the combustion section in order to improve combustion efficiency.

## Patentansprüche

1. Turbotriebwerk, das Folgendes umfasst:
- eine Verbrennungssektion (120);
- einen Wärmeenergiewandler (133);
- einen Katalysator (141, 142) zum Reduzieren der Emissionen von der Verbrennungssektion (120);
- mindestens einen zweiten Wärmetauscher (134), der für eine Wärmeübertragung von dem mindestens einen ersten Wärmeenergiewandler (133) in die komprimierte Luft (112) vor dem Eintreten in die Verbrennungssektion (120) ausgelegt ist, um die Verbrennungseffizienz zu erhöhen;
wobei der Katalysator (141, 142) nach der Verbrennungssektion (120) angeordnet ist;
wobei der Wärmeenergiewandler (133) zwischen der Verbrennungssektion (120) und dem Katalysator (141, 142) angeordnet ist;
wobei der Wärmeenergiewandler (133) dafür ausgelegt ist, Emissionsgase (125) von der Verbrennungssektion (120) durch Wärmeübertragung auf einen Betriebstemperaturbereich des Katalysators (141, 142) zwischen 250°C und 500°C zu kühlen, bevor diese Gase in den Katalysator (141, 142) eingeleitet werden.

2. Turbotriebwerk nach Anspruch 1, wobei der Wärmeenergiewandler (133) dafür ausgelegt ist, den Betriebstemperaturbereich zwischen 300°C und 400°C zu justieren.

3. Turbotriebwerk nach einem der Ansprüche 1 bis 2, wobei mindestens ein Wärmetauscher (133, 134) aus folgender Gruppe ausgewählt ist:
- Röhrenwärmetauscher;
- Wärmerohre; und
- Gas/Gas-Wärmetauscher.

4. Turbotriebwerk nach einem der Ansprüche 1 bis 3, wobei der Katalysator (141, 142) aus folgender Gruppe ausgewählt ist:
- ein Oxidationskatalysator;
- ein katalytischer Partikelfilter;
- ein selektiver Katalysator zum Reduzieren von Stickoxiden (SCR);
- eine Kombination aus SCR und Oxidationskatalysator; und
- ein SCR-Katalysator mit integriertem Partikelfilter.

5. Turbotriebwerk nach Anspruch 4, wobei der Oxidationskatalysator ein Metall der Platingruppe auf einem monolithischen Träger für eine oxidative katalytische Beseitigung von Kohlenwasserstoffen und Kohlenmonoxid umfasst.

6. Turbotriebwerk nach Anspruch 5, wobei der Oxidationskatalysator ein Pt/Al₂O₃-Katalysator ist.

7. Turbotriebwerk nach einem der Ansprüche 1 bis 4, wobei der Partikelfilter und/oder der selektive Katalysator (SCR) auf Zeolith basieren.

8. Turbotriebwerk nach einem der Ansprüche 1 bis 7, das des Weiteren einen regenerativen Partikelfilter und/oder eine Vorrichtung zur Entschwefelung (241) umfasst.

9. Turbotriebwerk nach einem der Ansprüche 1 bis 8, wobei der Katalysator oder die Entschwefelungsvorrichtung mindestens ein Metall oder eine Metallschicht aus Elementen umfasst, die aus folgender Gruppe ausgewählt sind:
- Titan, Vanadium, Molybdän, Chrom, Eisen, Kupfer, Cer; und
- Seltenerdenmetalle.

10. Turbotriebwerk nach einem der Ansprüche 1 bis 9, das des Weiteren Folgendes umfasst:
- eine Injektionsvorrichtung (144);
wobei die Injektionsvorrichtung (144) dafür ausgelegt ist, mindestens ein stickstofflialtiges Reduktionsmittel einzuspritzen, bevor die Emissionsgase in einen selektiven Katalysator (SCR) (142) eintreten.

11. Flugzeug (300), das ein Turbotriebwerk nach einem der Ansprüche 1 bis 10 umfasst.

12. Verfahren zur Emissionssenkung für ein Turbotriebwerk, wobei das Verfahren Folgendes umfasst:
- Senken einer Abgastemperatur eines Turbotriebwerks durch einen ersten Wärmetauscher (133) auf einen Betriebstemperaturbereich eines nachgeschalteten Katalysators (141) zwischen 250°C und 500°C;
- Einspritzen eines Reduktionsmittels in das Abgas durch eine Injektionsvorrichtung (144), bevor die Emissionsgase in einen selektiven Katalysator (SCR) (142) eintreten;
- Reduzieren von Gasemissionsprodukten des Abgases durch einen Katalysator; und
- Herausfiltern von Partikeln durch einen Partikelfilter;
- Übertragen der durch den ersten Wärmetauscher (133) zurückgewonnenen Wärme zu einem zweiten Wärmetauscher (134) in die Kompressionsluftsektion des Turbotriebwerks vor dem Eintreten in die Verbrennungssektion, um die Verbrennungseffizienz zu steigern.

## Revendications

1. Turbomoteur comprenant :
- une section de combustion (120) ;
- un convertisseur d'énergie thermique (133) ;
- un convertisseur catalytique (141, 142) pour réduire les émissions provenant de la section de combustion (120) ;
- au moins un second échangeur thermique (134) agencé pour le transfert de chaleur de l'au moins un premier convertisseur d'énergie thermique (133) dans l'air comprimé (112) avant l'entrée dans la section de combustion (120) afin d'améliorer le rendement de combustion ;
dans lequel le convertisseur catalytique (141, 142) est agencé en aval de la section de combustion (120) ;
dans lequel le convertisseur d'énergie thermique (133) est agencé entre la section de combustion (120) et le convertisseur catalytique (141, 142) ;
dans lequel le convertisseur d'énergie thermique (133) est adapté pour refroidir les gaz d'émission (125) provenant de la section de combustion (120) par transfert thermique à une plage de température fonctionnelle du convertisseur catalytique (141, 142) entre 250°C et 500°C avant d'introduire ces gaz dans le convertisseur catalytique (141, 142).

2. Turbomoteur selon la revendication 1, dans lequel le convertisseur d'énergie thermique (133) est adapté pour régler la plage de température fonctionnelle entre 300°C et 400 °C.

3. Turbomoteur selon l'une quelconque des revendications 1 à 2, dans lequel au moins un échangeur de chaleur (133, 134) est choisi parmi un groupe constitué de :
- échangeurs de chaleur tubulaires ;
- caloducs ; et
- échangeurs thermiques gaz-gaz.

4. Turbomoteur selon l'une quelconque des revendications 1 à 3, dans lequel le convertisseur catalytique (141, 142) est choisi parmi un groupe constitué de :
- un catalyseur d'oxydation ;
- un filtre à particules catalytique ;
- un catalyseur sélectif pour la réduction d'oxydes d'azote (SCR) ;
- une combinaison de SCR et de catalyseur d'oxydation ; et
- un catalyseur SCR à filtre de particules intégré.

5. Turbomoteur selon la revendication 4, dans lequel le catalyseur d'oxydation comprend un métal du groupe platine sur un support monolithe pour une élimination catalytique oxydante d'hydrocarbures et de monoxyde de carbone.

6. Turbomoteur selon la revendication 5, dans lequel le catalyseur d'oxydation est un catalyseur Pt/Al₂O₃.

7. Turbomoteur selon l'une quelconque des revendications 1 à 4,dans lequel le filtre à particules et/ou le catalyseur sélectif (SCR) sont à base de zéolite.

8. Turbomoteur selon l'une quelconque des revendications 1 à 7, comprenant en outre un filtre à particules régénératif et/ou un dispositif de désulfuration (241).

9. Turbomoteur selon l'une quelconque des revendications 1 à 8, dans lequel le convertisseur catalytique ou le dispositif de désulfuration comprend au moins un métal ou une couche métallique constitué(e) d'éléments choisis parmi le groupe :
- titane, vanadium, molybdène, chrome, fer, cuivre, cérium ; et
- métaux terres rares.

10. Turbomoteur selon l'une quelconque des revendications 1 à 9, comprenant en outre :
- un dispositif d'injection (144) ;
dans lequel le dispositif d'injection (144) est adapté pour injecter au moins un agent de réduction contenant de l'azote avant que les gaz d'émission entrent dans un convertisseur catalytique sélectif (SCR) (142).

11. Aéronef (300) comprenant un turbomoteur selon l'une des revendications 1 à 10.

12. Procédé de réduction d'émissions pour un turbomoteur comprenant :
- la réduction d'une température de gaz d'échappement d'un turbomoteur par un premier échangeur de chaleur (133) à une plage de température fonctionnelle d'un convertisseur catalytique (141) en aval entre 250°C et 500°C ;
- l'injection d'un agent de réduction dans le gaz d'échappement par un dispositif d'injection (144) avant que les gaz d'émission entrent dans un convertisseur catalytique sélectif (SCR) (142) ;
- la réduction des produits d'émission de gaz du gaz d'échappement par un convertisseur catalytique ; et
- le filtrage de matières particulaires par un filtre à particules ;
- le transfert de la chaleur récupérée par le premier échangeur de chaleur (133) vers un second échangeur de chaleur (134) dans la section d'air comprimée du turbomoteur avant l'entrée dans la section de combustion afin d'améliorer le rendement de la combustion.
